# FASCICULE DE BREVET EUROPEEN

(11) **EP 2 580 941 B1**
(45) Date de publication et mention de la délivrance du brevet: **09.11.2016**
(21) Numéro de dépôt: 11723987.1
(22) Date de dépôt: 08.06.2011
(51) Int. Cl.: H04W 4/10, H04W 4/08, H04W 84/08, H04W 92/02, H04W 88/16, H04W 76/00, H04W 88/10

(54) **DISPOSITIF PASSERELLE DE TRANSMISSION DE MESSAGES ENTRE DES RÉSEAUX DE RADIOCOMMUNICATIONS**
GATEWAY-VORRICHTUNG ZUR ÜBERTRAGUNG VON NACHRICHTEN ZWISCHEN FUNKKOMMUNIKATIONSNETZEN
GATEWAY DEVICE FOR TRANSMITTING MESSAGES BETWEEN RADIO COMMUNICATION NETWORKS

(30) Priorité: 08.06.2010 FR 1054513
(43) Date de publication de la demande: 17.04.2013
(73) Titulaire: Airbus DS SAS, 78990 Elancourt (FR)
(72) Inventeur: FOLSCHEID, Bruno, F-78150 Le Chesnay (FR); FURSTEIN, Catherine, F-78320 Le Mesnil-Saint-Denis (FR); RODRIGUES, Michel, F-92160 Antony (FR)
(74) Mandataire: Lebkiri, Alexandre
(86) Numéro de dépôt international: PCT/EP2011/059527
(87) Numéro de publication internationale: WO 2011/154462

(56) Documents cités:
- WO-A1-03/049372
- WO-A1-2006/035366
- WO-A1-2009/092842
- US-A1- 2004 116 075
- US-A1- 2008 181 145

## Description

La présente invention concerne un dispositif passerelle de transmission de messages dans des réseaux de radiocommunications, plus particulièrement dans des réseaux de radiocommunications professionnels.

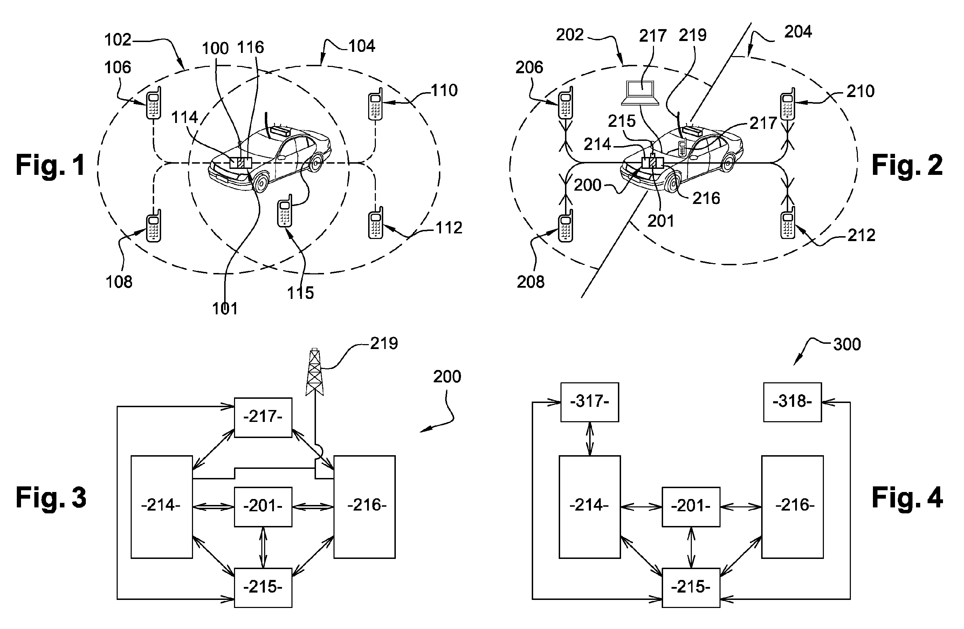

En référence à la figure 1 est représenté un dispositif passerelle de communication 100 connu, tel qu'un serveur, mis en oeuvre pour retransmettre des messages phoniques - c'est-à-dire relatifs à des communications audio - lors de communications de groupe entre des premiers terminaux 106 et 108 d'un premier réseau 102 de radiocommunications et des seconds terminaux 110 et 112 d'un second réseau 104 de radiocommunications, ces réseaux 102 et 104 étant dédiés à des professionnels comme, par exemple, des forces de sécurité ou de protection civile.

Le codage des radiocommunications mis en oeuvre dans chaque réseau 102 ou 104 pouvant être spécifique, notamment en termes de fréquences et de protocoles, le dispositif passerelle, également dénommé passerelle par la suite, comprend des moyens spécifiquement dédiés aux communications avec chacun de ces réseaux 102 ou 104.

Plus précisément, ces moyens comprennent, d'une part, un premier bloc 114 émetteur/récepteur pouvant communiquer conformément à un codage propre au réseau 102 et, d'autre part, un second bloc 116 émetteur/récepteur pouvant communiquer conformément à un codage propre au réseau 104. Par la suite, de tels blocs 114 ou 116 sont dénommés transmetteurs 114 ou 116.

Par ailleurs la passerelle de communication 100 comprend un commutateur 101 retransmettant automatiquement les communications phoniques de groupe décodées par l'un des transmetteurs 114 ou 116 respectivement à l'autre de ces transmetteurs 116 ou 114. Par exemple le transmetteur 114 reçoit et décode les messages phoniques émis dans le réseau 102 afin de les retransmettre, via le commutateur 101, au transmetteur 116 qui effectue leur émission dans le réseau 104 selon un codage propre à ce dernier.

La passerelle 100 de communication comporte également une interface homme-machine 115, de type terminal utilisateur, connectée avec ou sans fil à l'un et/ou l'autre des transmetteurs de la passerelle pour communiquer par messages phoniques avec tous les autres terminaux des deux réseaux 102 et 104 selon des communications de groupes telles que précédemment décrites.

Une telle passerelle 100 de communication se révèle insatisfaisante lors d'une utilisation de l'interface 115 comme terminal puisque ses fonctions sont bridées et ne permettent que la retransmission de messages phoniques d'une communication de groupe alors même que des messages présentant d'autres formes, comme des messages écrits mettant en oeuvre, par exemple, le protocole Internet, le protocole SMS pour « Short Message Standard » en anglais, des transferts de données mettant en oeuvre, par exemple, le protocole FTP pour « File Transfer Protocol » en anglais, ou encore des communications de phonie autres que celles autorisées dans l'art antérieur, par exemple limitées à un unique terminal ou à un groupe de terminaux réduits, peuvent se révéler utiles pour un usage professionnel.

En considérant par exemple que le véhicule équipé de la passerelle 100 effectue une patrouille de police, la passerelle 100 ne peut donc pas être utilisée pour consulter le numéro d'une plaque d'immatriculation, relevée par un agent des forces de l'ordre muni de l'interface 115, dans une base de données de véhicules volés distante.

De ce fait un opérateur de la passerelle 100 est contraint d'utiliser un terminal propre autre que l'interface 115, inclus dans l'un des deux réseaux 102 ou 104, pour participer à des communications autres que des communications phoniques de groupe.

Le document US 2008/181145 A1 divulgue un passerelle (Gateway) qui relie les réseaux sans fil de sécurité publique (un réseau P25) et les réseaux commerciaux sans fil, qui prennent en charge push-to-talk appels de groupe (un réseau OMA-PoC). Cet passerelle traduit "Real Time Protocol" (RTP), "Session Protocole Invitation" (SIP), et "Talk Burst Control Protocol" (TBCP) / "Real Time Control Protocol" (RTCP) messages reçus du réseau OMA-PoC et messages RTP et SIP reçus du réseau P25, dans un format du réseau de réception. La passerelle a une composante exploitable de contrôle d'appel pour mettre en place et le démontage des connexions RTP entre les réseaux, une composante push-to-talk commande utilisable pour arbitrer les appels entre les combinés de communications sans fil des deux réseaux, et un composant de commande de transmission pouvant fonctionner pour transférer des paquets de médias entre les réseaux.; La passerelle réduit le nombre d'appels "set-ups" requis lorsqu'un appelant veut parler car les connexions peuvent rester actives jusqu'à ce que les participants aux groupes de discussion quittent l'appel de groupe push-to-talk.

La présente invention vise à résoudre au moins un des problèmes mentionnés ci-dessus. C'est pourquoi elle concerne un dispositif passerelle de radiocommunications selon la revendication 1.

L'invention sera mieux comprise à la lecture de la description qui suit, donnée uniquement à titre illustratif et non limitatif, et faite en référence aux dessins en annexe dans lesquels :
- la figure 1, déjà décrite, est une vue schématique d'une passerelle de communication reliant deux réseaux de radiocommunication selon l'art antérieur,
- la figure 2 est une vue schématique d'un dispositif passerelle de transmission de messages dans des réseaux de radiocommunication selon l'invention, et
- les figures 3 et 4 sont des représentations fonctionnelles respectivement de première ou deuxième réalisations du dispositif passerelle selon l'invention.

Dans la description effectuée ci-dessous, des éléments ayant des fonctions identiques et/ou similaires sur différents dessins ont la même référence sur ces dessins.

En référence à la figure 2, un dispositif passerelle 200 conforme à l'invention comprend des transmetteurs 214 et 216, une interface homme-machine IHM 217, un commutateur 201, un contrôleur 215 et une antenne 219.

Ces entités 201, 214, 216, 215, 217, et 219 peuvent être représentées sous forme de blocs fonctionnels (figure 3) pouvant être implémentés sous la forme de modules logiciels et/ou matériels.

Dans cette réalisation, le dispositif passerelle 200 comporte trois modes de fonctionnement : un mode actif, un mode suspendu et un mode inactif, qui sont contrôlés par le contrôleur 215. Ces trois modes sont décrits plus en détails dans la suite de la description.

Comme précédemment décrit à l'aide de la figure 1, les transmetteurs 214 et 216 traitent des messages phoniques provenant ou à destination, d'une part, de premiers terminaux 206 et 208 d'un premier réseau 202 professionnel selon un premier codage et, d'autre part, de seconds terminaux 210 et 212 d'un second réseau professionnel 204 selon un second codage.

A ce stade, il convient de souligner que ces deux codages peuvent être distincts ou non, par exemple dans le premier cas lorsque le dispositif passerelle 200 a notamment pour fonction de permettre des échanges entre des réseaux ayant des caractéristiques différentes ou, dans le second cas, d'augmenter la couverture d'un même réseau.

Chaque transmetteur comprend au moins deux états de fonctionnement :
- un état actif, pendant lequel le transmetteur traite des messages, et
- un état suspendu, pendant lequel le transmetteur ne traite pas de message.

Les réseaux professionnels 202 et 204 peuvent être identiques ou différents. Ce sont, par exemple, des réseaux de communication directe de type talkie walkie, ou des réseaux de communication relayées de type TETRAPOL, TETRA ou P25

Les messages phoniques ou non phoniques peuvent comprendre des données audio ou non et des données de signalisation, et sont réceptionnés et transmis par une antenne 219 du dispositif aux différents transmetteurs 214 et 216. A la réception d'un message phonique, un transmetteur envoie les données audio vers le commutateur 201 et les données de signalisation vers le contrôleur 215.

L'interface 217 peut comporter par exemple un ensemble haut parleur / micro de terminal téléphonique et/ou un ensemble clavier / écran d'ordinateur portable permettant le traitement de différents messages de différentes natures.

L'interface 217 est connectée avec ou sans fil au contrôleur 215 et à l'un ou aux deux transmetteurs 214, 216. Des données de signalisation sont échangées entre l'interface 217 et le contrôleur 215. Des données des messages phoniques ou non phoniques autres que les données de signalisation sont échangées entre l'interface 217 et l'un ou les deux transmetteurs.

Selon une première réalisation l'interface 217 est connectée aux deux transmetteurs 214 et 216. L'interface 217 peut comprendre deux configurations de communication distinctes respectivement propres aux communications traitées par les transmetteurs 214 et 216 et se connecter, avec ou sans fils, avec l'un ou l'autre des transmetteurs selon la configuration établie. Ainsi l'interface de communication peut sélectionner la configuration de communication selon le transmetteur avec lequel elle va se connecter pour participer à une communication phonique de groupe ou à une communication restreinte, phonique ou non phonique.

Selon une deuxième réalisation, représentée sur la figure 4, le dispositif passerelle 300 peut présenter différentes interfaces 317 et/ou 318 pour commander des transmissions de messages selon des natures, ou formes, spécifiques. Par exemple une interface type téléphone - avec notamment un écouteur et un microphone - peut être dédiée à des messages phoniques tandis qu'une interface type ordinateur portable - avec notamment un clavier et un écran - peut être dédiée à des messages écrits types courriers électroniques ou SMS.

Chaque interface 317 ou 318 peut comprendre une configuration de communication propre aux communications traitées par le transmetteur 214 ou respectivement 216 avec lequel elle est connectée.

Le commutateur 201 commute les données audio des messages phoniques, à transmettre entre les terminaux de deux réseaux associés au dispositif 300 (non représentés). Si ces deux réseaux sont différents, le commutateur 201 convertit les données audio provenant d'un des deux réseaux pour être transmis vers l'autre réseau. Le commutateur comprend deux états de fonctionnement :
- un état actif, pendant lequel le commutateur est en fonctionnement et il traite et transmet des données audio entre les transmetteurs 214 et 216, et
- un état suspendu, pendant lequel le commutateur suspend la transmission des données audio entre les transmetteurs 214 et 216.

En fonction des données de signalisation qu'il reçoit, le contrôleur 215 contrôle les états actif ou suspendu du commutateur 201 et des transmetteurs 214 et 216 en leur transmettant par exemple des messages de contrôle. De même, le contrôleur peut contrôler l'activation ou non des éléments de l'interface 217, tels que son micro et son haut-parleur.

En mode inactif du dispositif passerelle, le dispositif est manuellement arrêté par l'utilisateur, il est hors fonctionnement.

En mode actif du dispositif passerelle, le commutateur 201 et les transmetteurs 214 et 216 sont à l'état actif.

Les transmetteurs traitent uniquement les messages phoniques pour une communication de groupe dans laquelle participent tous les terminaux des deux réseaux et l'interface 217.

Le dispositif passerelle peut être automatiquement en mode actif, dès la réception d'un message phonique d'une communication de groupe provenant de l'un des deux réseaux. Les données de signalisation incluses dans le message phonique sont traitées par le contrôleur 215 qui commande l'activation du commutateur et des transmetteurs.

En mode suspendu du dispositif passerelle, le contrôleur commande le commutateur à l'état suspendu. Selon les données de signalisation reçues et analysées, le contrôleur peut également commander l'un des deux transmetteurs à l'état suspendu et l'autre transmetteur à l'état actif ou peut commander les deux transmetteurs à l'état actif.

Le mode suspendu du dispositif passerelle 200 est mis en oeuvre lorsque le dispositif 200 traite - en réception ou en émission - un message non phonique et/ou un message adressé à un nombre limité de terminaux d'un des deux réseaux, ce nombre étant inférieur au nombre de terminaux du réseau.

Le mode suspendu du dispositif est activé par le contrôleur 215, lorsque les données de signalisation de ces messages indiquent un changement de communication autre qu'une communication phonique de groupe. Par exemple, un terminal d'un des deux réseaux requiert une communication privée prioritaire avec l'interface 217 du dispositif passerelle ou inversement, transmis par un des deux transmetteurs.

Selon un autre exemple, l'utilisateur de l'interface 217 souhaite transmettre un message de type SMS ou effectuer une recherche dans une base de données distante à accéder via l'un des deux réseaux 202, 204 depuis l'un des deux transmetteurs.

L'interface 217 transmet alors au contrôleur 215 des données de signalisation comportant cette requête. A l'analyse des données de signalisation, le contrôleur 215 commande l'état actif au transmetteur qui traite le message non phonique et/ou le message adressé à un nombre limité de terminaux. Le contrôleur commande également l'état suspendu au commutateur 201 et à l'autre transmetteur qui ne traite pas les messages.

Le mode suspendu du dispositif 200 peut également être mis en oeuvre lorsque le contrôleur commande l'état suspendu du commutateur et active les transmetteurs 214 et 216 afin que ceux-ci puissent traiter, indépendamment l'un de l'autre, différents messages phoniques destinés à une communication privée restreinte, ou non phonique depuis ou vers l'interface avec lequel ils sont connectés. Ainsi chacun des transmetteurs peut transmettre des messages à un terminal, ou à un nombre limité de terminaux, sans mettre en oeuvre une communication de groupe comme requis dans l'art antérieur. En d'autres termes, un utilisateur du dispositif passerelle 200 peut transmettre depuis l'interface 217 un message destiné à un unique terminal 206, 208, 210 ou 212, ou à un groupe réduit de terminaux d'au moins un de ces réseaux. Les messages non phoniques de différentes natures, sont par exemple des messages écrits, des messages vidéo, des messages multimédia, des messages de données, des messages de transfert de fichiers, des messages conformes au protocole IP pour « Internet Protocol » en anglais, des messages conformes au protocole SMS pour « Short Message Standard » en anglais et/ou des messages conformes au réseau OTAR « Over The Air Reprogramming » en anglais.

Le mode suspendu du dispositif passerelle peut être temporaire, c'est-à-dire automatiquement limité à une durée déterminée, ou permanente, c'est-à-dire jusqu'au traitement d'une commande ultérieure provenant du contrôleur 215 qui a reçu des données de signalisation requérant un tel changement. Ces données de signalisation peuvent provenir de l'interface 217 ou des différents réseaux 202 ou 204.

Le mode suspendu du dispositif passerelle 200 peut être commandé par le contrôleur 215 lorsqu'un délai prédéterminé s'écoule sans que le dispositif passerelle 200 ne traite de messages phoniques, permettant ainsi au dispositif passerelle 200 d'être en attente de messages de différentes natures.

Le dispositif passerelle 200 peut être requis simultanément, par différents terminaux, pour transmettre différents types de messages impliquant l'établissement simultané d'une communication phonique de groupe ou d'une communication restreinte phonique ou non phonique. Afin de pallier à d'éventuels conflits de transmissions, cette réalisation de l'invention prévoit des moyens dans le contrôleur 215 pour allouer différents niveaux de priorités à différents messages, en fonction de leurs données de signalisation, de telle sorte que la suspension ou l'activation du fonctionnement du commutateur soit dépendante d'un niveau de priorité d'un message reçu.

Par exemple, un niveau de priorité peut être alloué à un message en fonction de sa forme ou nature, du terminal générant ce message et/ou d'un codage de priorité dans le message.

## Revendications

1. Dispositif passerelle (200) de radiocommunications destiné à retransmettre des messages de différentes formes entre un premier réseau (202) de radiocommunications et un second réseau (204) de radiocommunications, ledit dispositif passerelle (200, 300) comprenant ;
- un premier transmetteur (214) apte à traiter des radiocommunications du premier réseau (202) selon un premier codage,
- un second transmetteur (216) apte à traiter des radiocommunications du second réseau (214) selon un second codage, et
- un commutateur (201) qui, lorsque le dispositif passerelle est activé, relie le premier et le second transmetteurs (214, 216) pour retransmettre des messages audio d'une communication de groupe traités par l'un desdits transmetteurs (214, 216) vers l'autre desdits transmetteurs (214, 216), **caractérisé en ce qu'**il comprend :
▪ un contrôleur (215) pour mettre en oeuvre automatiquement :
- le dispositif passerelle en mode actif lors d'une réception d'un message audio d'une communication de groupe par une analyse de messages de signalisation desdits messages audio indiquant une communication de groupe;
- le dispositif passerelle en mode suspendu en suspendant automatiquement le commutateur (201) afin que lesdits premier et second transmetteurs (214, 216) traitent indépendamment l'un de l'autre des messages reçus entre le dispositif passerelle et respectivement l'un des deux réseaux de radiocommunications, le mode suspendu étant activé lorsque des données de signalisation des messages reçus par l'un des transmetteurs n'indiquent pas de communication audio de groupe.
▪ au moins une interface (217) homme-machine connectée aux transmetteurs et comportant des configurations de communication dédiées aux traitements de chaque transmetteur, de telle sorte qu'un utilisateur du dispositif passerelle (200) peut communiquer avec au moins un terminal d'un des deux réseaux de radiocommunications (202, 204) lorsque le mode suspendu est activé.

## Patentansprüche

1. Gateway-Vorrichtung (200) für Funkkommunikationen, die dazu bestimmt ist, Nachrichten verschiedener Formen zwischen einem ersten Funkkommunikationsnetz (202) und einem zweiten Funkkommunikationsnetz (204) zu übertragen, wobei die Gateway-Vorrichtung (200, 300) umfasst:
- einen ersten Sender (214), der imstande ist, Funkkommunikationen des ersten Netzes (202) gemäß einer ersten Codierung zu verarbeiten,
- einen zweiten Sender (216), der imstande ist, Funkkommunikationen des zweiten Netzes (214) gemäß einer zweiten Codierung zu verarbeiten,
- einen Switch (201), der, wenn die Gateway-Vorrichtung aktiviert ist, den ersten und den zweiten Sender (214, 216) verbindet, um Audionachrichten einer Gruppenkommunikation zu übertragen, die von einem der Sender (214, 216) zu dem anderen der Sender (214, 216) übertragen werden,
**dadurch gekennzeichnet, dass** sie umfasst:
o einen Controller (215), um automatisch umzusetzen:
- die Gateway-Vorrichtung im aktiven Modus bei einem Empfang einer Audionachricht einer Gruppenkommunikation mittels einer Analyse von Signalisierungsnachrichten der Audionachrichten, die eine Gruppenkommunikation anzeigen,
- die Gateway-Vorrichtung im Haltemodus durch automatisches Halten des Switchs (201), damit der erste und zweite Sender (214, 214) unabhängig voneinander zwischen der Gateway-Vorrichtung und jeweils einem der zwei Funkkommunikationsnetze empfangene Nachrichten verarbeiten, wobei der Haltemodus aktiviert ist, wenn Signalisierungsdaten der von einem der Sender empfangenen Nachrichten keine Audio-Gruppenkommunikation anzeigen,
o mindestens eine mit den Sendern verbundene Mensch-Maschine-Schnittstelle (217), die Kommunikationskonfigurationen aufweist, die speziell für die Verarbeitungen jedes Senders bestimmt sind, so dass ein Benutzer der Gateway-Vorrichtung (200) mit mindestens einem Endgerät eines der zwei Funkkommunikationsnetze (202, 204) kommunizieren kann, wenn der Haltemodus aktiviert ist.

## Claims

1. Radio communications gateway device (200) for retransmitting messages of different forms between a first radio communications network (202) and a second radio communications network (204), said gateway device (200, 300) comprising:
- a first transmitter (214) capable of processing the radio communications of the first network (202) according to a first coding scheme,
- a second transmitter (216) capable of processing the radio communications of the second network (214) according to a second coding scheme, and
- a switch (201) which, when the gateway device is activated, connects the first and second transmitters (214, 216) in order to retransmit voice messages from a group communication processed by one of said transmitters (214, 216) to the other of said transmitters (214, 216), **characterised in that** it comprises:
• a controller (215) for automatically implementing:
- the gateway device in active mode upon reception of a voice message of a group communication by analysis of signalling messages of said voice messages indicating a group communication;
- the gateway device in suspended mode by automatically suspending the switch (201) so that said first and second transmitters (214, 216) process independently of one another messages received between the gateway device and respectively one of the two radio communication networks, the suspended mode being activated when signalling data of the messages received by one of the transmitters does not indicate group voice communication.
• at least one man-machine interface (217) connected to the transmitters and comprising communication configurations dedicated to the processing of each transmitter, in such a way that a user of the gateway device (200) can communicate with at least one terminal of one of the two radio communications networks (202, 204) when the suspended mode is activated.
